# EUROPEAN PATENT APPLICATION

(11) **EP 1 204 280 A1**
(43) Date of publication of application: **08.05.2002**
(21) Application number: 00123796.5
(22) Date of filing: 02.11.2000
(51) Int. Cl.: H04N 9/806

(54) **Method for recording and reproduction of coded video data streams and video recording and reproduction device therefore**

(71) Applicant: Matsushita Electric Industrial Co., Ltd., Kadoma-shi Osaka-fu, 571 (JP)
(72) Inventor: Sigel, Andreas, 31226 Peine (DE); Heiber, Henning, 31226 Peine (DE); Wischhusen, Christian, 38533 Vordorf (DE)
(74) Representative: Gerstein, Hans Joachim

(57) **Abstract**

A method for recording and reproduction of coded video data streams and affiliated audio data streams of at least one video channel, wherein the video and audio data streams are transmitted in form of data packages in bundles, comprises the steps of:
a) interpreting of Packet Identifiers (PID) of said data packages (3);
b) storing of said Packet Identifiers (PID), of said data packages of the video and audio data streams for at least one selected video channel (4);
c) selecting of video and audio data packages of a defined video channel for further processing (3);
d) recording of said selected data packages together with a list of the stored Packet Identifiers (PID) and affiliated channel identifiers and channel informations (5);
e) read out of the recorded list (5);
f) displaying of the recorded audio channel identifiers and of the affiliated audio channel informations (10);
g) selecting of at least one audio channel and of the respective Packet Identifiers (PID) (11);
h) play back of the recorded data packages including the selected Packet Identifiers (PID) (13);
i) reproduction of the video data streams and the audio data streams affiliated to the selected audio channels (10).

## Description

The invention relates to a method for recording and reproduction of coded video data streams and affiliated audio data streams of at least one video channel, wherein the video and audio data streams are transmitted in form of data packages in bundles.

The invention relates further to a video recording and reproduction device, especially to a video recorder, for coded digital video and audio data streams comprising a digital recording medium and a microcontroller for controlling the video recording and reproduction device.

Digital video and audio data streams are usually coded according to the so called MPEG-standard, especially the MPEG 2-standard. This standard was developped by the Moving-Pictures-Experts-Group and named by said group. The respective standards are: ISO/IEC IS 11172-1 and ISO/IEC DIS 13818-1 to 13818-3. The standard comprises the three parts systems, video and audio and defines the distribution of video and audio data streams as well as the techniques for coding and decoding. The data streams are in principle such that control data are put in front of the actual payload data in form of a header. The header includes especially information about kind and coding techniques of the payload data.

Such coded digital video and audio data streams are transmitted especially according to the digital-video-broadcasting-standard (DVB). Thereby, several video channels can be transmitted at a time wherein per video channel several audio channels may be provided. In this way, the transmission, recording and reproduction is not limited to audio information recorded stereo or quadrophon. The DVB-standard allows transmission of multi-language-program wherein the audio information for one video channel is sent in different audio channels.

Digital MPEG based memory devices, especially according to the standards D-VHS (Digital-Video-Home-System), DVD (Digital Versatile Disk) or AVHDD allows recording of said different audio channels and choosing of a defined audio channel for decoding in a serial production mode. In this way, the user is able to select the audio channels in the reproduction mode for decoding and reproduction at a TV set freely. In contrary to said method, the defined audio informations have to be selected already in the recording mode by the use of analog recording devices, e. g. according to the VHS-VCR standard (Video-Home-System - Video-Cassette-Recorder), because of the limited number of the audio channels available for recording.

Compared to analog systems, the data streams are transmitted piecewise in data packages in digital communication systems. Said data package oriented transmission of the informations shows the advantage that the informations are using different connections pathes in between the transmission network and can be buffered easily. Further, several data streams might be put together to a new data stream by interlacing of the data packages (multiplex). Said package oriented transmission allows a very flexible transmission.

In principle, two different kinds of data streams are distinguished in the MPEG standard. The so called program stream is provided for the use in a quasi error free environment. The program stream is used for the whole applications for storing of a data stream and for video signal production in a studio environment. For the transmission of data in long-distance-networks and for radio broadcasting, the so called transport stream is defined. Said stream shows a constant transport package length, so that the data streams is to be synchronized easily.

The program stream as well as the transport stream are using a packaged elementary stream (PES) for the video and audio data streams. The packaged elementary stream comprises exlusively data from a source coder, which are segmented in relatively large packages. Said packages are beginning with a header, comprising essentially control informations for the respective package. Each packet of the packaged elementary stream PES represents a payload data packet for the transport stream. A header and an optional adaption field is put in front of said PES-packet as well. Said header field, said adaption field and the following PES-packet are defining a transport packet of the transport stream having a length of 188 Byte. The transport packages are comprising a so called packet identification (PID), so to speak the identification plate of a transport packet. Packets belonging to the same elementary stream (PES) have the identical PID.

The packet payload data are essentially the coded audio or video data streams. Anyhow, alphanumerical characters can be transmitted as payload information for data transmission e.g. for teletex applications as well as for program incidental informations and informations for describing the structure of the respective data stream. Said informations about the structure of the transport stream are especially essential for the use in the following decoding, so that a PID = 0 is defined for transmitting the program specific informations in form of a table. Thus, the respective basis informations can be found in said transport stream packages having a PID = 0. There, the so called Program Association Table is stored, defing the number of the programs included in a transport stream and the allocation of PIDs and the Program-Map-Tables to be find therein. The Program-Map-Table comprises a list of the whole PIDs for elementary data streams belonging to the program allocated to said Program-Map-Table. Further, the Program-Map-Table comprises a number of description elements for characterizing of the elementary data streams.

For decoding of a program or channel having the number I in a receiver e.g. a video recorder of a television set, the transport decoder has to reconstruct the respective Program-Map-Tables for the program I at the first. Said table can be find in the transport packets having a PID registered under the respective program number in the Program Association Table. Said Program Association Table is to be found under the PID = 0. In the next step, the whole packets defined by a PID, which is registered for the respective program in the Program Association Table are analyzed for reconstruction of the desired Program-Map-Table. In said table are comments to the wole PID's for the program including the whole audio channels assigned to the video channel stored. Further, the single elementary data streams of the program or the channel are described e.g. by the kind of the audio data streams.

The transport streams and the respective program specific informations are analyzed during the recording process in the video recording- and reproduction device, because the packaged elementary streams PES are stored only.

It is an object of the invention to provide an improved method for recording and reproduction of coded video data streams and affiliated audio data streams of at least one video channel for recording various audio channel per video channel and later reproduction as choice of audio channels depending on their content together with the affiliated video data stream.

The method of the present invention comprising the features of the claim 1 comprises the steps of:
a) interpreting of Packet Identifiers (PID) of said data packages;
b) storing of said Packet Identifiers (PID) of said data packages of the video and audio data streams for at least one selected video channel;
c) selecting of video and audio data packages of a defined video channel for further processing;
d) recording of said selected data packages together with a list of the stored Packet Identifiers (PID) and affiliated channel identifiers and channel informations;
e) read out of the recorded list;
f) displaying of the recorded audio channel identifiers and of the affiliated audio channel informations;
g) selecting of at least one audio channel and of the respective Packet Identifiers;
h) playback of the recorded data packages including the selected Packet Identifiers;
i) reproduction of the video data streams and the audio data streams affiliated to the selected audio channels.

According to an aspect of the invention, the selected data pakkets of a video channel are recorded together with the list of the stored Packet Identifiers in a digital recording medium. Then, the recorded list of the Packet Identifiers is read out for reproduction and displayed e. g. at an on-screen-display, so that the kind of the recorded audio channels is visible and selectable. Especially with multi-language-programs, the at least one affiliated audio channel and the respective Packet Identifiers can be selected on the on-screen-display for a selected language. At the reproduction, the video data packets and the audio data packets having the selected Packet Identifiers are played back and reproduced in form of video and audio data streams.

Thus, the respective languages can be displayed as audio channel informations of the several audio channels in step f) and the respective audio channel affiliated to the selected language can be chosen in step g), when various audio channels are provided per video channel for transmitting of a multi-language-video.

Displaying of the audio channel informations and selection of the language and the respective audio channels or Packet identifiers may be effected interactively in a conventional On-Screen-Display (OSD).

The video and audio data streams are preferably coded in a Moving-Pictures-Experts-Group-standard format (MPEG).

A further aspect of the invention is a video recording and reproduction device for processing the aforementioned method.

The present invention is explained by use of the enclosed drawings in detail by way of an example. It shows:
- Fig. 1: - block diagram of a video recording and reproduction device for recording and reproduction of multi-language programs;
- Fig. 2: - structure of a packaged elementary stream (PES) and incorporation in the transport stream packets;
- Fig. 3: - structure of a transport packet;
- Fig. 4: - structure of the transmission of program specific informations;

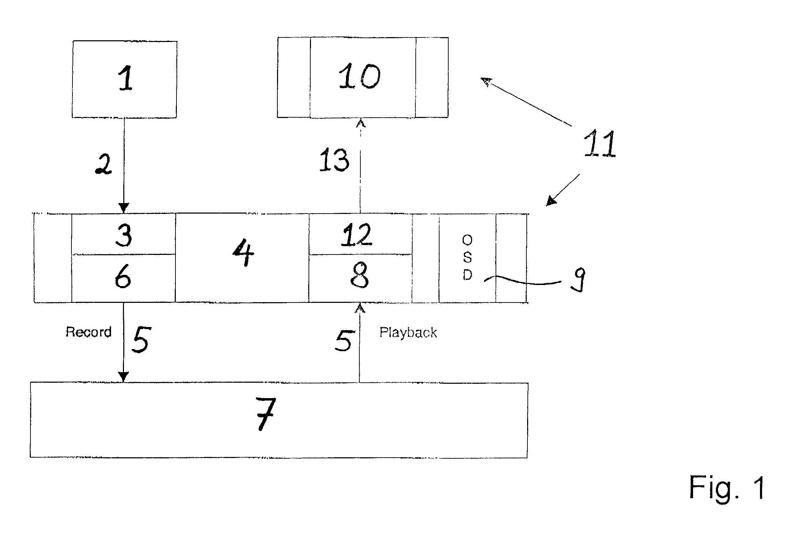

Fig. 1 shows a video recorder comprising the elements essential for processing the method according to the invention. A digital video and audio data stream is received by a digital receiver 1 and send to a signal processing unit in form of a digital MPEG2-transport stream 2. The transport stream 2 is transmitted in packets according to the MPEG-standard characterized by Packet Identifiers PID. Said Packet Identifiers are filtered by a pakket filter 3, so that only those data packets are selected and processed further, which are belonging to the program or channel to be recorded. Therefore, the respective Packet Identifiers PID's of the packets are determined for the video and audio data packets belonging to the selected program and stored in an internal memory of the microcontroller system 4. The respective list of the Packet Identifiers PID is stored together with the stored selected digital MPEG-2-transport stream 5. Therefore, the list of the Packet Identifiers is prepared in a so called service table (SI) reconstruction process 6 so, that the Packet Identifiers PID's are recorded together with the respective channel identifications and channel informations.

The selected digital MPEG-2-transport stream 5 is read out from the digital recording medium 7 for reproduction. The digital recording medium 7 can be e. g. a fixed-disk-drive, a digital versatile disk (DVD) or similar devices.

In the reproduction mode, the lists comprising the Packet Identifiers PID is read out from the recording medium 7 and interpreted by the microcontroller 4. Said process is called Service-Table (SI) evaluation and comprises preparation of the informations about the video program, the program number, the informations about the affiliated audio channels and about the respective Packet Identifiers (PID). An overview about the available audio channels and their content, especially about the available languages, can be shown at the TV screen 10 by use of a known on-screen-display (OSD) 9. Said on-screen-display 9 is interactive, wherein a user can select a defined language. After audio channel selection 11 by the user, an audio decoder 12 is controlled by the microcontroller 4 so, that the one selected audio channel or the various selected audio channels are decoded and transmitted together with the decoded video signal in form of a TV signal 13 to the TV set 10 for reproduction.

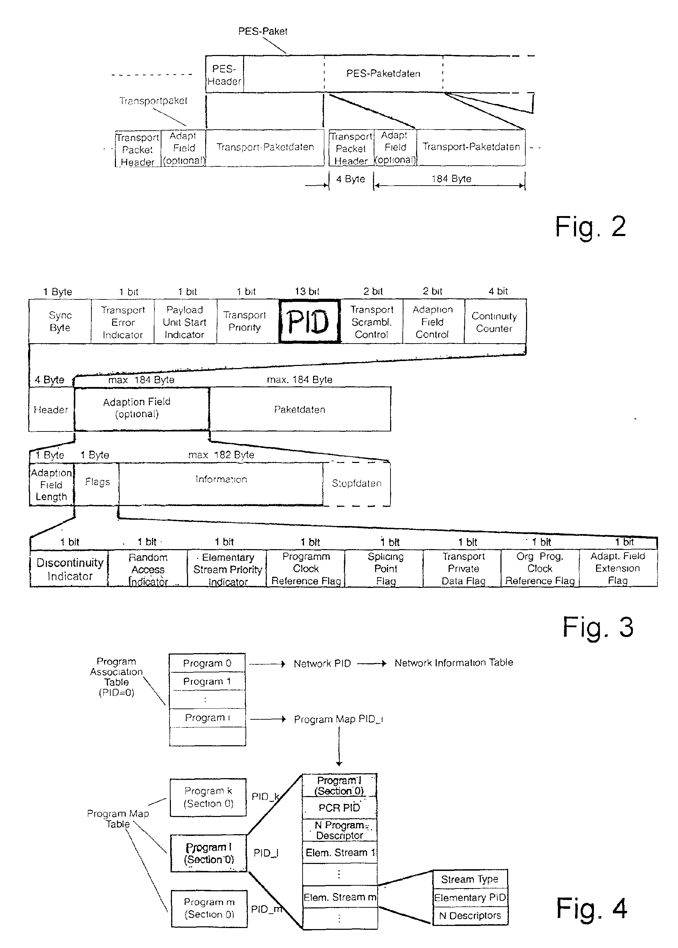

The principle structure of MPEG-2-video and audio data streams is shown in Fig. 2. Said video and audio data are transmitted in packaged elementary streams PES in bundles. A PES-packet includes the payload data, this means the video and audio informations, as well as a PES-header comprising informations about the PES-packet. The PES-packet is built in the transport packet transmitted e.g. via a broadband channel in form of transport packet data. A transport packet header comprising informations for the transport packet and an optional adaption field is put in front of the transport packet data. The length of the transport packet is 188 byte, wherein 4 byte are used for the transport packet header.

The content of the transport packet header is shown in the upper line of figur 3. The main information for the use in the method according to the invention is a packet identification PID having a length of 13 bit included in the transport packet header. The rest of the informations shown in Fig. 3 are used for decoding and further use of the data streams and are not of further interest for the use of the method according to the invention. Moreover, the methods for decoding of the data streams are well-known, so that they are not further described in the following.

Transport packets having a PID = 0 are comprising a so called Program Association Table shown in Fig. 4. The several programs 1 to i are listed in said table, which are transmitted in the transport data stream. Furthermore, the allocation between the Packet Identifiers PID's and the so called Program-Map-Tables are defined for each of the programs 1 to i. Thus, the Program Association Table provides pointers to respective Program-Map-Tables to the various programs 1 to i. The pointers comprises Packet Identifiers PID's for transport packets comprising the respective Program-Map-Tables. Then, the transport packet data including the Packet Identifiers PID's for the Program-Map-Table are received and reconstructed for a program. The Program-Map-Table comprises a list of the whole Packet Identifiers PID's for the data streams, which belongs to the program assigned to the Program-Map-Table. Further a number of description elements are included in the table for characterizing the data streams. Herewith, the Packet Identifiers PID's relating to audio channels affiliated to a video program can be reconstructed.

The invention provides selection of the transport packets for a defined selected program by evaluation of the Program-Association-Table and the Program-Map-Table for a program and generation of a so called Service-Table (SI), wherein the Packet Identifiers PID's of the audio channels affiliated to a video program are stored. Said Service-Table (SI) is stored together with the transport packets for the program. The Service-Table (SI) is read out and evaluated in the reproduction mode, wherein the audio channels and respective informations, especially about the respective country languages of an audio channel listed in the Service-Table (SI) are displayed on the TV screen. Then, a desired country language can be selected interactively, so that only the transport packets and the respective affiliated Packet Identifiers PID's together with the selected video data stream have to be selected, decoded and reconstructed by the video recorder.

## Claims

1. Method for recording and reproduction of coded video data streams and affiliated audio data streams of at least one video channel, wherein the video and audio data streams are transmitted in form of data packages in bundles, comprising the steps of:
a) interpreting of Packet Identifiers (PID) of said data packages;
b) storing of said Packet Identifiers (PID) of said data packages of the video and audio data streams for at least one selected video channel;
c) selecting of video and audio data packages of a defined video channel for further processing;
d) recording of said selected data packages together with a list of the stored Packet Identifiers (PID) and affiliated channel identifiers and channel informations;
e) read out of the recorded list;
f) displaying of the recorded audio channel identifiers and of the affiliated audio channel informations;
g) selecting of at least one audio channel and of the respective Packet Identifiers (PID);
h) play back of the recorded data packages including the selected Packet Identifiers (PID);
i) reproduction of the video data streams and the audio data streams affiliated to the selected audio channels.

2. Method according to claim 1, wherein at least two audio channels are provided for one video channel for transmitting of a multi language video, **characterized in, that** the audio channel informations displayed in the step f) are the country languages of the audio information of the respective audio channels, and that in the step g) the audio channel affiliated to the selected country language is selected.

3. Method according to claim 1 or 2, **characterized in that** the step of displaying in the step f) is interactive by use of an On-Screen-Display (OSD).

4. Method according to one of the preceding claims, **characterized in that** the video and audio data streams are coded in the Moving-Pictures-Experts-Group-Standard-format (MPEG).

5. Video recording and reproduction device, especially video recorder, for coded digital video and audio data streams comprising a digital recording medium and a microcontroller system (4) for controlling the video recording and reproduction device, **characterized in that** the video recording and reproduction device is constructed for carrying out the method according to claim 1 to 3.
